# NOUVEAU FASCICULE DE BREVET EUROPEEN

(11) **EP 2 785 999 B2**
(45) Date de publication et mention de la décision concernant l'opposition: **12.07.2023**
(45) Mention de la délivrance du brevet: 30.12.2015
(21) Numéro de dépôt: 12795515.1
(22) Date de dépôt: 12.11.2012
(51) Int. Cl.: F02B 31/06

(54) **SYSTÈME D'ADMISSION DE GAZ POUR UN MOTEUR DE VÉHICULE**
ANSAUGSYSTEM FÜR EINEN MOTOR EINES FAHRZEUGS
INTAKE AIR SYSTEM FOR A MOTOR VEHICLE

(30) Priorité: 28.11.2011 FR 1160866
(43) Date de publication de la demande: 08.10.2014
(73) Titulaire: Valeo Systèmes de Contrôle Moteur, 95800 Cergy (FR)
(72) Inventeur: LEROUX, Samuel, F-78300 Poissy (FR); LESTIENNE, Stéphane, F-95170 Deuil la Barre (FR); SORIN, Stéphane, F-78600 Maison Laffite (FR)
(74) Mandataire: Valeo Powertrain Systems
(86) Numéro de dépôt international: PCT/FR2012/052592
(87) Numéro de publication internationale: WO 2013/079846

(56) Documents cités:
- EP-A1- 0 675 274
- EP-A1- 0 675 274
- EP-A1- 0 726 388
- EP-A1- 1 707 780
- EP-A1- 1 707 780
- EP-A1- 2 088 303
- EP-A1- 2 088 303
- EP-A2- 1 085 197
- EP-A2- 1 270 917
- DE-A1- 10 112 070
- DE-A1- 19 707 599
- DE-A1-102004 013 309
- DE-A1-102006 000 538
- DE-B3- 10 341 393
- JP-A- 2010 133 275
- US-A1- 2002 108 601
- US-A1- 2011 162 611
- US-A1- 2011 162 611

## Description

L'invention se rapporte à un système d'admission de gaz pour un moteur de véhicule à combustion.

Les moteurs à combustion comportent des cylindres délimitant des chambres de combustion, et sont souvent équipés de dispositifs de contrôle, permettant de réguler les flux gazeux envoyés dans ces cylindres, afin d'optimiser les conditions de combustion dans lesdites chambres durant les différentes phases de roulage du véhicule. Cette optimisation est obtenue par la présence de conduits d'alimentation en gaz, situés en amont desdits cylindres, et configurés pour créer des mouvements tourbillonnaires bien particuliers dans les chambres de combustion, comme par exemple, le courant de « swirl ». Au travers de ce courant, il s'agit de communiquer aux gaz frais introduits dans les chambres de combustion lors de la phase d'admission une vitesse de rotation autour de l'axe de révolution du cylindre, afin d'améliorer l'homogénéité du mélange gaz frais-carburant. De façon spécifique, ce courant de « swirl » est généralement obtenu au moyen de deux conduits d'alimentation par cylindre, dont un conduit principal et un conduit secondaire, la fermeture du conduit principal conduisant à la création de ce courant. Le débit de gaz passant par les conduits principaux est régulé par des volets pivotants montés sur un arbre, et qui permettent soit d'ouvrir totalement, soit d'obturer partiellement ou complètement lesdits conduits principaux. Il est donc particulièrement important de bien contrôler dans le temps les différents flux gazeux introduits dans les cylindres, pour obtenir à tout instant, de façon précise et bien maîtrisée, les différents effets recherchés. Bien que le gaz injecté dans ces cylindres soit le plus souvent constitué par de l'air, le terme général « gaz » est conservé durant toute la description, pour tenir compte par exemple de la présence d'un circuit EGR (Exhaust Gaz Recirculation) Haute Pression, susceptible de réinjecter en amont des cylindres des gaz d'échappement ayant déjà subi une combustion.

Les systèmes d'admission de gaz dotés d'un dispositif de contrôle des flux gazeux incidents dans les cylindres existent et ont déjà fait l'objet de brevets. On peut par exemple citer le brevet EP 0726388, qui se rapporte à tel système, et dont le dispositif de contrôle des flux gazeux amenés à être introduits dans les cylindres comprend un arbre pivotant, encapsulé entre deux demi-coquilles et muni de volets, la rotation plus ou moins importante dudit arbre entrainant simultanément celles des volets, dont l'inclinaison va réguler le flux gazeux incident dans chaque cylindre ou provoquer son interruption. Le principal inconvénient de ce type de dispositif de contrôle est qu'il possède une géométrie figée, prévue pour une seule configuration de moteur, et qu'il ne peut donc pas être modifié simplement et rapidement pour s'adapter à un autre type de moteur.

Les systèmes d'admission de gaz selon l'invention sont dotés d'un dispositif de contrôle des flux gazeux incidents à l'entrée des cylindres d'un moteur à combustion d'un véhicule, qui peut facilement s'adapter à une configuration particulière d'un moteur. En effet, ce dispositif est ajustable au moyen de petites modifications simples et rapides à mettre en oeuvre, pour le rendre performant vis-à-vis d'une pluralité de moteurs se distinguant les uns des autres par le positionnement et la géométrie de leurs cylindres. De cette manière, un tel dispositif de contrôle pouvant être ajusté par petites touches, sans nécessiter un réusinage complet de celui-ci, demeure performant pour un coût peu élevé.

L'invention a pour objet un système d'admission de gaz pour un moteur, notamment un moteur de véhicule à combustion interne comprenant des cylindres, ledit système étant équipé d'un dispositif de contrôle de l'entrée de gaz d'admission pour un moteur, ledit dispositif étant sous la forme d'une pièce de guidage compartimentée, la pièce de guidage comprenant une pièce support avec des compartiments, chaque compartiment comprenant un conduit principal et un conduit secondaire de gaz, le dispositif de contrôle comprenant une multiplicité de modules délimitant chacun un conduit principal et un conduit secondaire, et en ce que les modules constituent des pièces séparées conçues pour venir se monter les unes aux autres, les modules étant aptes à occuper lesdits compartiments,
chaque compartiment comprenant un fond présentant une première ouverture correspondant au conduit principal, et une deuxième ouverture correspondant au conduit secondaire,
la pièce de guidage du dispositif de contrôle étant configurée pour être fixée au moteur de manière à ce que chaque compartiment se retrouve en face d'un cylindre, caractérisé en ce que la pièce support sert à la fixation du dispositif de contrôle sur le moteur,
la pièce support est d'épaisseur constante et est munie de deux rangées parallèles de cinq orifices chacune, lesdits orifices étant positionnés au niveau des quatre sommets de chacun des quatre logements et étant destinés à être traversés par des vis de fixation, deux logements successifs ayant deux orifices en commun.
La principale caractéristique d'un système d'admission selon l'invention est que le dispositif de contrôle comprend une pièce support avec des compartiments, un arbre équipé de volets, et une multiplicité de modules délimitant chacun un conduit principal et un conduit secondaire et étant aptes à occuper les compartiments, la pièce support, l'arbre et chaque module constituant des pièces séparées, conçues pour venir se monter les unes aux autres. De cette manière, le dispositif de contrôle se décompose en une pluralité de pièces ayant leur propre fonction:
- une pièce support servant à la fixation du dispositif de contrôle sur le moteur,
- un arbre doté de volets assurant l'obturation ou l'ouverture des conduits principaux,
- une pluralité de modules servant au guidage et à d'acheminement des gaz vers chaque cylindre,

Les pièces précédentes peuvent donc être modifiées individuellement ou de façon groupée, pour permettre au dispositif de contrôle de s'adapter à un moteur possédant des cylindres ayant un agencement et/ou une géométrie particulière. Les volets peuvent être commandés, soit simultanément, soit individuellement et indépendamment les uns des autres. Leur position le long de l'arbre est également facilement ajustable, sans manipulation compliquée ni utilisation d'un outillage sophistiqué. Chaque module peut être modifié de manière à changer les dimensions des deux conduits qu'il délimite ainsi que leur positionnement respectif au sein dudit module. Les modules peuvent être tous changés en même temps, ou être changés individuellement en fonction des besoins. En se décomposant en une multiplicité de pièces, le dispositif de contrôle d'un système d'admission selon l'invention, peut donc facilement s'adapter à une configuration particulière de moteur, au moyen de modifications plus ou moins importantes réalisées sur une ou plusieurs desdites pièces le composant. Il est à préciser que la position des volets sur l'arbre doit être ajustée à la position des conduits principaux des modules, une fois que ceux-ci ont été placés dans les compartiments, afin qu'ils puissent coopérer avec ceux-ci de façon efficace. Il est à noter qu'un autre avantage important procuré par un dispositif de contrôle selon l'invention, est que toutes les pièces constituant ledit dispositif sont montées les unes aux autres de façon réversible. Autrement dit, une fois que le dispositif de contrôle est assemblé, il peut facilement être démonté partiellement ou totalement, au moyen d'une désolidarisation rapide et aisée desdites pièces.

Chaque compartiment comprend un fond présentant une première ouverture correspondant au conduit principal et une deuxième ouverture correspondant au conduit secondaire. Le contour de ces ouvertures est analogue au contour du conduit principal et du conduit secondaire, et chaque module est inséré dans un compartiment de façon à faire correspondre ses deux conduits avec les ouvertures du compartiment correspondantes. Ces ouvertures permettent d'assurer une continuité avec les conduits d'alimentation de chaque module, tout en garantissant une bonne étanchéité.

De façon préférentielle, la première ouverture est circulaire et la deuxième ouverture est rectangulaire. De cette manière, le conduit principal est cylindrique et le conduit secondaire est parallélépipédique. Le choix d'un conduit principal de section circulaire se justifie par le fait qu'il entraîne la mise en place d'un volet circulaire pour l'obturer. Or, un volet de forme circulaire est plus facile à usiner que n'importe quel autre type de volet. De plus, un volet circulaire appliqué à une extrémité circulaire d'un conduit principal, favorise une meilleure étanchéité lorsqu'il se retrouve dans une configuration d'obturation.

Préférentiellement, tous les compartiments sont alignés les uns à la suite des autres dans la pièce support, deux compartiments successifs étant séparés par une paroi comportant une gorge, lesdites gorges étant alignées selon un même axe pour définir un sillon rectiligne discontinu et apte à recevoir l'arbre. Chaque gorge est assimilable à une fente rectiligne, et l'ensemble des gorges est destiné à recevoir l'arbre. La pièce support sert donc à maintenir l'arbre dans le dispositif de contrôle, dans une position prédéterminée.

De façon avantageuse, la position des volets est réglable le long de l'arbre. Cette possibilité de réglage supplémentaire accroît encore un peu plus la souplesse d'utilisation du dispositif de contrôle, en multipliant les configurations potentielles dudit dispositif. Elle permet notamment d'adapter l'écartement entre deux volets successifs à la distance séparant deux cylindres successifs d'un moteur.

Avantageusement, la distance séparant deux volets successifs est constante le long de l'arbre. Ce mode de réalisation est applicable à un moteur comprenant des cylindres séparés par des distances identiques, ce qui est majoritairement le cas.

De façon préférentielle, tous les volets montés sur l'arbre sont parallèles entre eux. De cette manière, tous les volets adopteront simultanément la même position par rapport aux conduits principaux, ce mode de réalisation suggérant la même stratégie d'injection de gaz d'un cylindre à l'autre.

Préférentiellement, chaque module est constitué par une pièce dont les contours sont analogues à ceux des compartiments, de sorte que chaque module puisse venir s'emboîter dans chaque compartiment. Chaque module, disposant d'un conduit principal et d'un conduit secondaire, peut donc être remplacé par un module de même géométrie et de mêmes dimensions mais possédant un conduit principal et un conduit secondaire modifiés. De cette manière, un dispositif de contrôle impliquant plusieurs modules, offre une multiplicité de combinaisons possibles au niveau desdits modules, permettant d'augmenter grandement les configurations d'utilisation possibles dudit dispositif. Comparativement à une configuration de dispositif de contrôle pour laquelle les modules et la pièce support constitueraient une seule et même pièce, le dispositif de contrôle d'un système d'admission selon l'invention est beaucoup plus attractif, dans la mesure où il peut se décliner selon un nombre important de variantes par un simple remplacement de modules et sans avoir à être usiné une nouvelle fois dans son intégralité. L'emboîtement de chaque module dans le compartiment correspondant peut s'effectuer à force, ou en laissant subsister un jeu.

De façon avantageuse, chaque module est doté d'un canal principal cylindrique et d'un canal secondaire parallélépipédique.

L'invention se rapporte également à un procédé de montage d'un dispositif de contrôle de l'entrée des gaz sur un moteur à combustion, ledit dispositif appartenant à un système d'admission selon l'invention. La principale caractéristique d'un procédé de montage selon l'invention est qu'il comprend les étapes suivantes :
- L'arbre équipé de volets est placé dans la pièce support compartimenté, de sorte que chaque volet se retrouve au fond de chaque compartiment,
- Chaque module est introduit séparément dans chaque compartiment de la pièce support, de manière à faire correspondre le conduit principal avec le volet, l'arbre se retrouvant entre ladite pièce support et chacun desdits modules,
- Fixation de chaque module dans chaque compartiment,
- Fixation du dispositif de contrôle assemblé sur le moteur.

Avantageusement, le dispositif de contrôle est fixé au moteur, de manière à ce que chaque compartiment se retrouve en face d'un cylindre, chaque volet se retrouvant entre chaque cylindre et chaque module, et délimitant partiellement chacun desdits cylindres.

Les systèmes d'admission de gaz selon l'invention présentent l'avantage d'être souples d'utilisation car ils mettent en oeuvre un dispositif modulable de contrôle d'entrée des gaz dans les cylindres. En effet, ledit dispositif étant constitué d'une pluralité de pièces séparées, il peut facilement s'adapter à une configuration particulière de moteur, au moyen de modifications apportées à seulement certaines pièces le constituant, sans avoir à procéder à un nouvel usinage en profondeur dudit dispositif. Le dispositif de contrôle a de plus l'avantage de pouvoir être démonté facilement, de manière totale ou partielle, dans le but d'être réutilisé dans une autre configuration.

L'invention concerne aussi un dispositif de contrôle de l'entrée de gaz d'admission pour un moteur, notamment un moteur de véhicule à combustion interne comprenant des cylindres, ledit dispositif étant sous la forme d'une pièce de guidage compartimentée, chaque compartiment comprenant un conduit principal et un conduit secondaire de gaz, caractérisé en ce que le dispositif de contrôle comprend une multiplicité de modules délimitant chacun un conduit principal et un conduit secondaire, et en ce que les modules constituent des pièces séparées conçues pour venir se monter les unes aux autres.

Autrement dit, les modules sont des pièces séparées conçues pour être solidaires ensemble après une opération de montage.

Le dispositif peut présenter l'une quelconque des caractéristiques présentées précédemment pour le dispositif de contrôle du système d'admission ci-dessus.

En particulier, dans un mode de réalisation de ce dispositif, chaque compartiment comprend en outre un volet mobile prévu pour réguler le passage des gaz dans le conduit principal. Chaque volet (14) peut être monté pivotant autour d'un arbre traversant la pièce de guidage.

Dans un mode de réalisation de ce dispositif, tous les compartiments sont alignés les uns à la suite des autres dans la pièce de guidage, deux compartiments successifs étant séparés par une paroi comportant une gorge, et en ce que lesdites gorges sont alignées selon un même axe pour définir un sillon rectiligne discontinu et apte à recevoir ledit arbre.

La pièce de guidage comprend une pièce support avec des compartiments, les modules étant aptes à occuper lesdits compartiments. La pièce support et les modules constituent des pièces séparées conçues pour venir se monter les unes aux autres.

L'invention concerne en outre un procédé de montage d'un dispositif de contrôle selon l'invention sur un moteur, caractérisé en ce qu'il comprend le montage des modules les uns avec les autres et la fixation du dispositif de contrôle sur le moteur, chaque compartiment se retrouvant en face d'un cylindre du moteur.

Dans un mode de réalisation dans lequel chaque compartiment comprend un volet monté pivotant autour d'un arbre, le procédé de montage comprend en outre une étape dans laquelle l'arbre équipé de volets est placé dans la pièce support compartimentée, de sorte que chaque volet se retrouve au fond de chaque compartiment. Chaque volet peut être placé entre chaque cylindre et chaque module, et peut délimiter partiellement un cylindre.

Dans une variante de ce mode de réalisation dans laquelle le dispositif comprend en outre une pièce support et des modules dont les contours sont analogues à ceux des compartiments de la pièce support, le procédé de montage peut comprendre les étapes suivantes :
- chaque module est introduit séparément dans chaque compartiment de la pièce support, de manière à faire correspondre le conduit principal avec le volet, l'arbre se retrouvant entre ladite pièce support et chacun desdits modules ;
- fixation de chaque module dans chaque compartiment.

On donne ci-après une description détaillée d'un mode de réalisation préféré d'un système d'admission de gaz d'un moteur à combustion d'un véhicule, en se référant aux figures aux dessins annexés sur lesquels :
- La figure 1 est une vue en perspective éclatée d'un dispositif de contrôle mis en oeuvre dans un système d'admission selon l'invention et permettant de réguler les flux de gaz introduits dans les cylindres d'un moteur,
- La figure 2 est une vue en perspective d'un système d'admission selon l'invention, monté sur un moteur à combustion d'un véhicule et montrant le dispositif de contrôle de la figure 1 assemblé.

Pour la description détaillée d'un mode de réalisation préféré d'un système d'admission de gaz selon l'invention, il est supposé que le gaz injecté dans les cylindres du moteur 2 est constitué par de l'air.

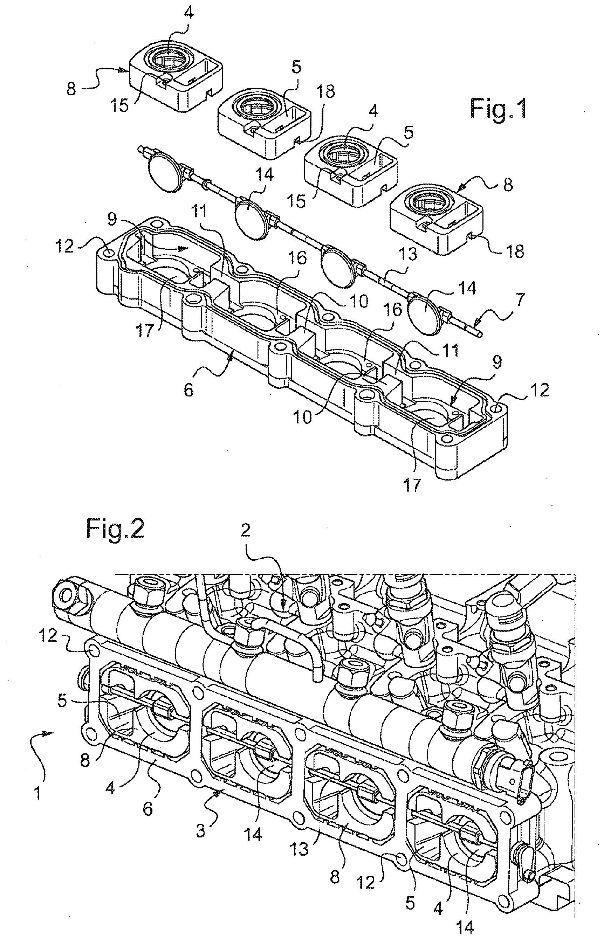

En se référant aux figures 1 et 2, un système d'admission 1 d'air selon l'invention permet d'alimenter en air quatre cylindres d'un moteur 2 à combustion d'un véhicule automobile, lesdits cylindres délimitant des chambres de combustion dans lesquelles s'opèrent les mélanges air frais/carburant. Ce système d'admission 1 fait intervenir un dispositif de contrôle 3 des flux d'air incidents destinés à alimenter chaque cylindre, afin notamment de créer des mouvements tourbillonnaires à l'intérieur des chambres de combustion, dans l'optique d'homogénéiser les mélanges air/carburant. Parmi ces mouvements tourbillonnaires, le courant de « swirl » consistant à communiquer à l'air frais introduit dans les chambres de combustion lors de la phase d'admission une vitesse de rotation autour de l'axe de révolution du cylindre est particulièrement recherché, car il contribue grandement à améliorer les conditions de mélange entre l'air introduit et le carburant. Ce courant de « swirl » est généralement obtenu au moyen d'un conduit principal 4 et d'un conduit secondaire 5 situés en amont de chaque cylindre, la fermeture du conduit principal conduisant à la création du courant de « swirl ».

En se référant à la figure 1, le dispositif de contrôle 3 est constitué d'une pièce support 6 monobloc, d'un organe d'obturation 7 et de quatre modules 8 d'alimentation séparés. La pièce support 6 est une pièce allongée, assimilable à un cadre compartimenté, de forme rectangulaire, et faisant apparaître quatre logements 9 identiques, alignés selon sa longueur. Chaque logement 9 est sensiblement parallélépipédique, et deux logements 9 successifs sont séparés par une paroi 10 comportant une gorge 11 semblable à une rainure rectiligne, lesdites gorges 11 au sein de la pièce support 6 étant alignées selon un même axe longitudinal de ladite pièce support 6, de manière à former un sillon rectiligne et discontinu. Chaque logement 9 est délimité par une paroi 16 plane formant le fond dudit logement 9, ladite paroi 16 possédant une ouverture de section rectangulaire et une ouverture de section circulaire 17. Cette pièce support 6 est d'épaisseur constante et est munie de deux rangées parallèles de cinq orifices 12 chacune, lesdits orifices 12 étant positionnés au niveau des quatre sommets de chacun des quatre logements 9 et étant destinés à être traversés par des vis de fixation, deux logements successifs 9 ayant deux orifices 12 en commun. L'organe d'obturation 7 est constitué par un arbre 13 sur lequel sont montés quatre volets 14 plans et circulaires, et dont la position sur ledit arbre 13 est ajustable par glissement sur celui-ci. De cette manière, ces volets 14 peuvent occuper une place variable le long de l'arbre 13 afin de s'adapter à un écartement particulier des cylindres sur le moteur 2. Ces volets 14 sont fixés à l'arbre 13 en étant tous parallèles entre eux, et sont donc amenés à pivoter simultanément lors de la mise en rotation de l'arbre 13. Les quatre modules 8 d'alimentation sont tous identiques et sont destinés à venir occuper chacun un logement 9 de la pièce support 6. Un module 8 est assimilable à un boîtier compact de forme sensiblement parallélépipédique, et dont les contours sont analogues à ceux d'un logement 9 de la pièce support 6, afin de pouvoir venir s'emboîter idéalement à l'intérieur de celui-ci. Chaque module 8 comprend un conduit principal 4 et un conduit secondaire 5, le conduit principal 4 étant sensiblement cylindrique et le conduit secondaire 5 ayant une section sensiblement rectangulaire. Au sein de chaque module 8, les deux conduits 4,5 sont placés côte à côte de manière à avoir leurs axes de symétrie parallèles. Chaque module 8 possède un orifice 15 prévu pour recevoir une vis de fixation, dans le but d'être arrimé à la pièce support 6. Chaque module 8 doit posséder un contour extérieur constant, afin de pouvoir venir s'emboîter dans la pièce support 6. En revanche, la géométrie des deux conduits 4,5, leurs dimensions ainsi que leur agencement au sein d'un même module 8 sont ajustables. Chaque module 8 est également doté d'encoches 18 pour interagir avec l'arbre 13 de l'organe d'obturation 7.

En se référant à la figure 2, un procédé de montage d'un dispositif de contrôle 3 d'un système d'admission d'air selon l'invention, et destiné à réguler le flux d'air incident dans les cylindres du moteur 2, comprend les étapes suivantes :
- L'arbre 13 équipé de ses volets 14 est placé dans le sillon rectiligne et discontinu constitué par les gorges 11 de la pièce support 6, de sorte que chaque volet 14 circulaire vienne se placer en face de l'ouverture circulaire 17 du fond 16 de chaque compartiment 9.
- Chaque module 8 est ensuite amené séparément dans chaque compartiment 9 de la pièce support 6, de manière à faire correspondre son conduit principal 4 avec le volet 14, l'arbre 13 se retrouvant entre ladite pièce support 6 et chacun desdits modules 8. L'introduction de chaque module 4 dans un compartiment 9, correspond à un positionnement de l'arbre 13 dans les encoches 18 de chacun desdits modules 4.
- Fixation des modules 4 dans la pièce support 6 au moyen de vis traversant les orifices 15 desdits modules 8.
- Une fois assemblé, le dispositif de contrôle 3 est fixé au moteur 2, également par l'intermédiaire de vis, cette fixation s'effectuant de manière à ce que chaque compartiment 9 se retrouve en face d'un cylindre, et de manière à ce que chaque volet 14 soit placé entre chaque cylindre et chaque module 8, et délimite partiellement un cylindre.

Bien entendu, l'invention n'est pas limitée aux exemples décrits et est définie par la portée des revendications.

## Revendications

1. Système d'admission (1) de gaz pour un moteur (2), notamment un moteur de véhicule à combustion interne comprenant des cylindres, ledit système (1) étant équipé d'un dispositif de contrôle (3) de l'entrée de gaz d'admission pour un moteur (2), ledit dispositif étant sous la forme d'une pièce de guidage (6) compartimentée, la pièce de guidage (6) comprenant une pièce support (6) avec des compartiments (9),chaque compartiment (9) comprenant un conduit principal (4) et un conduit secondaire (5) de gaz, le dispositif de contrôle (3) comprenant une multiplicité de modules (8) délimitant chacun un conduit principal (4) et un conduit secondaire (5), et en ce que les modules (8) constituent des pièces séparées conçues pour venir se monter les unes aux autres, les modules étant aptes à occuper lesdits compartiments (9),
chaque compartiment (9) comprenant un fond présentant une première ouverture (17) correspondant au conduit principal (4), et une deuxième ouverture correspondant au conduit secondaire (5),
la pièce de guidage (6) du dispositif de contrôle (3) étant configurée pour être fixée au moteur (2) de manière à ce que chaque compartiment (9) se retrouve en face d'un cylindre,
**caractérisé en ce que** la pièce support (6) sert à la fixation du dispositif de contrôle sur le moteur,
la pièce support (6) est d'épaisseur constante et est munie de deux rangées parallèles de cinq orifices (12) chacune, lesdits orifices (12) étant positionnés au niveau des quatre sommets de chacun des quatre logements (9) et étant destinés à être traversés par des vis de fixation, deux logements successifs (9) ayant deux orifices (12) en commun.

2. Système d'admission (1) de gaz selon la revendication 1, **caractérisé en ce que** la première ouverture (17) est circulaire et la deuxième ouverture est rectangulaire.

3. Système d'admission (1) de gaz selon l'une des revendications 1 ou 2, dans lequel chaque compartiment (9) comprend en outre un volet (14) mobile prévu pour réguler le passage des gaz dans le conduit principal (4).

4. Système d'admission (1) de gaz selon la revendication 3, dans lequel chaque volet (14) est monté pivotant autour d'un arbre (13) traversant la pièce de guidage (6).

5. Système d'admission (1) de gaz selon la revendication 4, **caractérisé en ce que** tous les compartiments (9) sont alignés les uns à la suite des autres dans la pièce de guidage (6), deux compartiments (9) successifs étant séparés par une paroi (10) comportant une gorge (11), et **en ce que** lesdites gorges (11) sont alignées selon un même axe pour définir un sillon rectiligne discontinu et apte à recevoir ledit arbre (13).

6. Système d'admission (1) de gaz selon la revendication 4 ou 5, **caractérisé en ce que** la position des volets (14) est réglable le long de l'arbre (13).

7. Système d'admission (1) de gaz selon l'une quelconque des revendications 4 à 6, **caractérisé en ce que** la distance séparant deux volets (14) successifs est constante le long de l'arbre (13).

8. Système d'admission (1) de gaz selon l'une quelconque des revendications 4 à 7, **caractérisé en ce que** tous les volets (14) montés sur l'arbre (13) sont parallèles entre eux.

9. Système d'admission (1) de gaz selon l'une quelconque des revendications 1 à 8, **caractérisé en ce que** chaque module (8) est doté d'un canal principal cylindrique (4) et d'un canal secondaire (5) parallélépipédique.

10. Système d'admission (1) de gaz selon l'une des revendications précédentes, **caractérisé en ce que** chaque module (8) est constitué par une pièce dont les contours sont analogues à ceux des compartiments (9), de sorte que chaque module (8) puisse venir s'emboîter dans chaque compartiment (9).

11. Procédé de montage sur un moteur (2) d'un dispositif de contrôle (3) équipant un système d'admission de gaz selon l'une quelconque des revendications 1 à 10, **caractérisé en ce qu'**il comprend le montage des modules (8) les uns avec les autres et la fixation du dispositif de contrôle (3) sur le moteur (2), chaque compartiment (9) se retrouvant en face d'un cylindre du moteur (2).

12. Procédé de montage selon la revendication 11, ledit dispositif de contrôle (3) étant selon la revendication 5, comprenant en outre une étape dans laquelle l'arbre (13) équipé de volets (14) est placé dans la pièce support (6) compartimentée, de sorte que chaque volet (14) se retrouve au fond de chaque compartiment (9).

13. Procédé de montage selon la revendication 12, ledit dispositif de contrôle (3) étant selon la revendication 11 **caractérisé en ce qu'**il comprend les étapes suivantes :
- chaque module (8) est introduit séparément dans chaque compartiment (9) de la pièce support (6), de manière à faire correspondre le conduit principal (4) avec le volet (14), l'arbre (13) se retrouvant entre ladite pièce (6) support et chacun desdits modules (8) ;
- fixation de chaque module (8) dans chaque compartiment (9).

## Patentansprüche

1. Gasansaugsystem (1) für einen Motor (2), insbesondere einen Verbrennungsmotor eines Fahrzeugs umfassend Zylinder, wobei das System (1) mit einer Vorrichtung (3) zur Kontrolle des Eingangs von Einlassgasen für einen Motor (2) ausgestattet ist, wobei die Vorrichtung in Form eines Führungsteils (6) mit Abteilen vorhanden ist, wobei das Führungsteil (6) ein Stützteil (6) mit Abteilen (9) umfasst, wobei jedes Abteil (9) eine Hauptgasleitung (4) und eine Nebengasleitung (5) umfasst, wobei die Kontrollvorrichtung (3) eine Vielzahl von Modulen (8) umfasst, die jeweils eine Hauptleitung (4) und eine Nebenleitung (5) begrenzen, und dadurch, dass die Module (8) getrennte Teile darstellen, die dazu vorgesehen sind, aneinander montiert zu werden, wobei die Module geeignet sind, die Abteile (9) einzunehmen,
wobei jedes Abteil (9) einen Boden umfasst, der eine erste Öffnung (17), die der Hauptleitung (4) entspricht, und eine zweite Öffnung, die der Nebenleitung (5) entspricht, aufweist,
wobei das Führungsteil (6) der Kontrollvorrichtung (3) derart ausgeführt ist, dass es am Motor (2) derart befestigt wird, dass sich jedes Abteil (9) gegenüber einem Zylinder befindet,
**dadurch gekennzeichnet, dass** das Stützteil (6) der Befestigung der Kontrollvorrichtung am Motor dient, das Stützteil (6) eine konstante Dicke aufweist und mit zwei parallelen Reihen mit jeweils fünf Öffnungen (12) versehen ist, wobei die Öffnungen (12) an den vier Scheitelpunkten jeder der vier Aufnahmen (9) positioniert sind und dazu bestimmt sind, von Befestigungsschrauben durchquert zu werden, wobei zwei aufeinanderfolgende Aufnahmen (9) zwei gemeinsame Öffnungen (12) aufweisen.

2. Gasansaugsystem (1) nach Anspruch 1, **dadurch gekennzeichnet, dass** die erste Öffnung (17) kreisförmig und die zweite Öffnung rechteckig ist.

3. Gasansaugsystem (1) nach einem der Ansprüche 1 oder 2, wobei jedes Abteil (9) ferner eine bewegliche Klappe (14) umfasst, die dazu vorgesehen ist, den Durchgang der Gase in die Hauptleitung (4) zu regulieren.

4. Gasansaugsystem (1) nach Anspruch 3, wobei jede Klappe (14) schwenkbar um eine Welle (13), die durch das Führungsteil (6) hindurchgeht, montiert ist.

5. Gasansaugsystem (1) nach Anspruch 4, **dadurch gekennzeichnet, dass** alle Abteile (9) nacheinander in dem Führungsteil (6) ausgerichtet sind, wobei zwei aufeinanderfolgende Abteile (9) durch eine Wand (10), umfassend eine Rille (11), getrennt sind, und dass die Rillen (11) entlang einer selben Achse ausgerichtet sind, um eine nicht durchgehende gerade Rinne zu bilden, die geeignet ist, die Welle (13) aufzunehmen.

6. Gasansaugsystem (1) nach Anspruch 4 oder 5, **dadurch gekennzeichnet, dass** die Position der Klappen (14) entlang der Welle (13) einstellbar ist.

7. Gasansaugsystem (1) nach einem der Ansprüche 4 bis 6, **dadurch gekennzeichnet, dass** der Abstand zwischen zwei aufeinanderfolgenden Klappen (14) entlang der Welle (13) konstant ist.

8. Gasansaugsystem (1) nach einem der Ansprüche 4 bis 7, **dadurch gekennzeichnet, dass** alle Klappen (14), die auf der Welle (13) montiert sind, zueinander parallel sind.

9. Gasansaugsystem (1) nach einem der Ansprüche 1 bis 8, **dadurch gekennzeichnet, dass** jedes Modul (8) mit einem zylindrischen Hauptkanal (4) und einem parallelflachen Nebenkanal (5) versehen ist.

10. Gasansaugsystem (1) nach einem der vorhergehenden Ansprüche, **dadurch gekennzeichnet, dass** jedes Modul (8) von einem Teil gebildet ist, dessen Konturen zu jenen der Abteile (9) analog sind, so dass jedes Modul (8) in jedes Abteil (9) eingesetzt werden kann.

11. Verfahren zur Montage einer Kontrollvorrichtung (3), mit der ein Gasansaugsystem nach einem der Ansprüche 1 bis 10 ausgestattet ist, auf einem Motor (2), **dadurch gekennzeichnet, dass** es die Montage der Module (8) miteinander und die Befestigung der Kontrollvorrichtung (3) auf dem Motor (2) umfasst, wobei sich jedes Abteil (9) gegenüber einem Zylinder des Motors (2) befindet.

12. Montageverfahren nach Anspruch 11, wobei die Kontrollvorrichtung (3) nach Anspruch 5 ausgeführt ist, ferner umfassend einen Schritt, bei dem die mit Klappen (14) ausgestattete Welle (13) in dem Stützteil (6) mit Abteilen derart angeordnet ist, dass sich jede Klappe (14) am Boden jedes Abteils (9) befindet.

13. Montageverfahren nach Anspruch 12, wobei die Kontrollvorrichtung (3) nach Anspruch 11 ausgeführt ist, **dadurch gekennzeichnet, dass** es die folgenden Schritte umfasst:
- jedes Modul (8) wird getrennt in jedes Abteil (9) des Stützteils (6) derart eingeführt, dass die Hauptleitung (4) mit der Klappe (14) übereinstimmt, wobei sich die Welle (13) zwischen dem Stützteil (6) und jedem der Module (8) befindet;
- Befestigung jedes Moduls (8) in jedem Abteil (9).

## Claims

1. Gas intake system (1) for an engine (2), in particular an internal combustion engine of a vehicle comprising cylinders, said system (1) being provided with a device for controlling (3) the ingress of intake gas to an engine (2), said device taking the form of a compartmentalized guide part (6), the guide part (6) comprising a support part (6) with compartments (9), each compartment (9) comprising a principal gas duct (4) and a secondary gas duct (5), the control device (3) comprising a plurality of modules (8) each defining a principal duct (4) and a secondary duct (5), and in that the modules (8) constitute separate parts designed to be mounted onto one another, the modules being capable of occupying said compartments (9),
each compartment (9) comprising a base having a first opening (17) corresponding to the principal duct (4), and a second opening corresponding to the secondary duct (5),
the guide part (6) of the device for controlling (3) being configured to be fixed to the engine (2) so that each compartment (9) is located opposite a cylinder,
**characterized in that** the support part (6) serves for fixing the control device to the engine,
the support part (6) has a constant thickness and is provided with two parallel rows of five orifices (12) each, said orifices (12) being positioned at the four apexes of each of the four housings (9) and being intended to be traversed by fastening screws, two successive housings (9) having two orifices (12) in common.

2. Gas intake system (1) according to Claim 1, **characterized in that** the first opening (17) is circular and the second opening is rectangular.

3. Gas intake system (1) according to either of Claims 1 and 2, in which each compartment (9) further comprises a mobile flap (14) provided to regulate the passage of the gases in the principal duct (4).

4. Gas intake system (1) according to Claim 3, in which each flap (14) is pivotably mounted about a shaft (13) passing through the guide part (6).

5. Gas intake system (1) according to Claim 4, **characterized in that** all the compartments (9) are aligned in succession in the guide part (6), two successive compartments (9) being separated by a wall (10) comprising a groove (11), and **in that** said grooves (11) are aligned along the same axis to define a discontinuous rectilinear channel capable of receiving said shaft (13).

6. Gas intake system (1) according to Claim 4 or 5, **characterized in that** the position of the flaps (14) is able to be regulated along the shaft (13).

7. Gas intake system (1) according to any one of Claims 4 to 6, **characterized in that** the distance separating two successive flaps (14) is constant along the shaft (13).

8. Gas intake system (1) according to any one of Claims 4 to 7, **characterized in that** all the flaps (14) mounted on the shaft (13) are parallel with one another.

9. Gas intake system (1) according to any one of Claims 1 to 8, **characterized in that** each module (8) is provided with a cylindrical principal channel (4) and with a parallelepipedal secondary channel (5).

10. Gas intake system (1) according to one of the preceding claims, **characterized in that** each module (8) consists of a part, the contours thereof being similar to those of the compartments (9), such that each module (8) is able to be nested in each compartment (9) .

11. Method for mounting, on an engine (2), a device for controlling (3) equipping a gas intake system according to any one of Claims 1 to 10, **characterized in that** it comprises the mounting of the modules (8) onto one another and the fixing of the device for controlling (3) to the engine (2), each compartment (9) being located opposite a cylinder of the engine (2).

12. Method for mounting according to Claim 11, said control device (3) being according to Claim 5, further comprising a step in which the shaft (13) provided with flaps (14) is placed in the compartmentalized support part (6), such that each flap (14) is located in the base of each compartment (9) .

13. Method for mounting according to Claim 12, said control device (3) being according to Claim 11, **characterized in that** it comprises the following steps:
- each module (8) is introduced separately into each compartment (9) of the support part (6) so as to make the principal duct (4) correspond with the flap (14), the shaft (13) being located between said support part (6) and each of said modules (8);
- fixing each module (8) in each compartment (9).
